(19) Europäisches Patentamt
European Patent Office
Office européen des brevets

(11) EP 2 974 778 A1

(12) **EUROPEAN PATENT APPLICATION**
published in accordance with Art. 153(4) EPC

(43) Date of publication:
**20.01.2016 Bulletin 2016/03**

(21) Application number: **14763144.4**

(22) Date of filing: **13.03.2014**

(51) Int Cl.:
***B01D 39/16*** *(2006.01)*
***B03C 3/28*** *(2006.01)*
***C08F 10/06*** *(2006.01)*
***C08L 23/12*** *(2006.01)*
***D04H 3/16*** *(2006.01)*

(86) International application number:
**PCT/JP2014/056781**

(87) International publication number:
**WO 2014/142275 (18.09.2014 Gazette 2014/38)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **13.03.2013 JP 2013050451**

(71) Applicant: **Idemitsu Kosan Co., Ltd.**
**Chiyoda-ku**
**Tokyo 100-8321 (JP)**

(72) Inventors:
- **TAKEBE, Tomoaki**
**Ichihara-shi**
**Chiba 299-0193 (JP)**
- **MINAMI, Yutaka**
**Ichihara-shi**
**Chiba 299-0193 (JP)**
- **KOORI, Yohei**
**Ichihara-shi**
**Chiba 299-0193 (JP)**

(74) Representative: **Vossius & Partner**
**PatentanwÀ¤lte Rechtsanwälte mbB**
**Siebertstrasse 3**
**81675 München (DE)**

(54) **FILTER, FILTER LAMINATE, AND FIBER PRODUCT COMPRISING FILTER OR FILTER LAMINATE**

(57) Provided is a filter comprising a polypropylene-based resin composition satisfying the following (1) to (3), the filter being made compatible with respect to collecting property and air permeability. (1) A melt flow rate 10 to 2,000 g/10 min. (2) A melting endotherm ΔH as measured by a differential scanning calorimeter is 50 to 95 J/g. (3) A polypropylene (A) having [mmmm] of 20 to 60 mol% is contained.

EP 2 974 778 A1

**Description**

Technical Field

The present invention relates to a filter and a filter laminate and also to a fiber product using the same.

Background Art

In recent years, air-cleaning filters which are used for the purposes of filtering air to be circulated in a room mainly in clean rooms and areas of, for example, building air-conditioning, etc., and cleaning the air in the room are spreading as an air filter, a cabin filter, and the like in an automobile cabin, a general household, and the like with a recent increase of automobiles or expansion of environmental pollution.

In addition, in widely spread home hygienic masks, dental masks, and surgical masks, a polypropylene-made meltblown nonwoven fabric is used as a filter material, and a spunbonded nonwoven fabric is used as a protective layer on the outside air side thereof, whereas the same spunbonded nonwoven fabric or various dry nonwoven fabrics or various wet nonwoven fabrics (e.g., a nonwoven fabric by a thermal bonding method or a spun lace nonwoven fabric), or the like is used on the mouth side thereof.

These air-cleaning filters and masks are required to have a performance of efficiently collecting dusts, pollens, mine dusts, and the like.

As a method of improving the collecting property of fibers constituting a filter, there is exemplified reduction of a denier value of the fibers. As a method of achieving the reduction of a denier value of the fibers, there is exemplified the production by, for example, a meltblown method. In this case, it becomes possible to achieve the reduction of a denier value by a decrease of the discharge amount, an increase of the flow rate of compressed air, or the like (see PTL 1). However, in the case where this production condition is adopted, the fibers cannot withstand a spinning tension, thereby likely causing end breakage. Thus, there was the case where a liquid droplet falls on a web to cause defective molding called a shot.

In addition, if the density of the fibers is increased aiming to improve the collecting property of the filter, there is generated such a problem that the air permeability is deteriorated. In order to obtain a filter having good air permeability (low pressure loss), it is suitable that a constituted fiber sheet has a thick fineness; on the other hand, voids among the fibers within the sheet are broadened, so that the collecting performance is lowered. As described above, it was difficult to make both the collecting property and the air permeability compatible with each other.

Citation List

Patent Literature

PTL 1: JP-A-2002-201560

Summary of Invention

Technical Problem

In view of the foregoing circumstances, the present invention has been made, and its object is to provide a filter in which both the collecting property and the air permeability are made compatible with each other.

Solution to Problem

The present inventors made extensive and intensive investigations. As a result, it has been found that the above-described problem is solved by using a resin composition containing a specified polypropylene. The present invention has been accomplished on the basis of such finding.

Specifically, the present invention provides the following inventions.

[1] A filter comprising a polypropylene-based resin composition satisfying the following (1) to (3):

(1) a melt flow rate is 10 to 2,000 g/10 min,
(2) a melting endotherm $\Delta H$ as measured by a differential scanning calorimeter is 50 to 95 J/g, and
(3) a polypropylene (A) having [mmmm] of 20 to 60 mol% is contained.

[2] The filter according to the above item [1], wherein the polypropylene (A) satisfies the following (a) to (e):

(a) rrrr/(1 - mmmm) $\leq$0.1,
(b) [rmrm] > 2.5 mol%,
(c) [mm] x [rr]/[mr]$^2$$\leq$ 2.0,
(d) weight average molecular weight (Mw) = 10,000 to 200,000, and
(e) molecular weight distribution (Mw/Mn) <4.0.

[3] The filter according to the above item [1] or [2], wherein the polypropylene-based resin composition further contains a polypropylene (B) other than the polypropylene (A).
[4] The filter according to any one of the above items [1] to [3], wherein a content of the polypropylene (A) in the polypropylene-based resin composition is 5 to 50% by mass on the basis of a total sum of the polypropylene (A) and the polypropylene (B).
[5] The filter according to any one of the above items [1] to [4], wherein a total content of the polypropylene (A) and the polypropylene (B) which the polypropylene-based resin composition contains is 50% by mass or more.
[6] The filter according to any one of the above items [1] to [5], wherein a basis weight is 7 to 100 g/m$^2$.
[7] The filter according to any one of the above items [1] to [6], comprising a nonwoven fabric produced using the polypropylene-based resin composition by a meltblown method.
[8] The filter according to any one of the above items [1] to [7], having been subjected to an electrostatic treatment.
[9] The filter according to the above item [8], wherein the electrostatic treatment is a corona treatment.
[10] A filter laminate including the filter according to any one of the above items [1] to [9].
[11] A fiber product having the filter according to any one of the above items [1] to [9] or the filter laminate according to the above item [10].
[12] A mask having the filter according to any one of the above items [1] to [9] or the filter laminate according to the above item [10].
[13] An air conditioner filter having the filter according to any one of the above items [1] to [9] or the filter laminate according to the above item [10].

Advantageous Effects of Invention

According to the present invention, a filter composed of a nonwoven fabric in which the reduction of a denier value of fibers is achieved and having excellent collecting property of fibers is provided. The subject filter is very small in terms of a mesh size and excellent in terms of collecting property and is preferably used for masks, air conditioner filters, and the like. In addition, even in the case of utilizing a meltblown method for achieving the reduction of a denier value of fibers, a filter can be produced without causing a shot, and a high-quality filter is provided.

Description of Embodiments

The filter of the present invention comprises a polypropylene-based resin composition satisfying the following (1) to (3):

(1) a melt flow rate is 10 to 2,000 g/10 min,
(2) a melting endotherm $\Delta$H as measured by a differential scanning calorimeter is 50 to 95 J/g, and
(3) a polypropylene (A) having [mmmm] of 20 to 60 mol% is contained.

While the above-described polypropylene-based resin composition contains the polypropylene (A) as described above, it is preferred that the polypropylene-based resin composition further contains a polypropylene (B) as described later.

[Polypropylene (A)]

The polypropylene (A) which is used in the present invention has a [mmmm] (meso pentad fraction) of 20 to 60 mol%. When the [mmmm] is less than 20 mol%, solidification after melting is very slow, so that the fibers adhere to a winding roll to make continuous molding difficult. In addition, when the [mmmm] is more than 60 mol%, a degree of crystallization is excessively high, so that end breakage is liable to occur. From such a viewpoints, the [mmmm] is preferably 30 to 60 mol%, and more preferably 30 to 55 mol%.
The [mmmm] as described above, and a [rrrr], [rmrm], [mm], [rr], and [mr] as described later are measured by the following NMR measurement.

[NMR measurement]

The $^{13}$C-NMR spectrum is measured with the following device under the following conditions. The peak assignment follows the method proposed by A. Zambelli, et al., "Macromolecules, 8, 687 (1975)".
Device: $^{13}$C-NMR device, JNM-EX400 series, manufactured by JEOL, Ltd.
Method: Proton complete decoupling method
Concentration: 220 mg/mL
Solvent: Mixed solvent of 1,2,4-trichlorobenzene and deuterated benzene in a ratio of 90/10 (volume ratio)
Temperature: 130°C
Pulse width: 45°
Pulse repetition time: 4 seconds
Accumulation: 10,000 times

<Calculating expressions>

$$M = m/S \times 100$$

$$R = \gamma/S \times 100$$

$$S = P\beta\beta + P\alpha\beta + P\alpha\gamma$$

S: Signal intensity of carbon atoms in side chain methyl of all the propylene units
$P\beta\beta$: 19.8 to 22.5 ppm
$P\alpha\beta$: 18.0 to 17.5 ppm
$P\alpha\gamma$: 17.5 to 17.1 ppm
$\gamma$: Racemic pentad chain, 20.7 to 20.3 ppm
m: Mesopentad chain, 21.7 to 22.5 ppm

The [mmmm], [rrrr], and [rmrm] are determined in conformity with the method proposed by A. Zambelli, et al., "Macromolecules, 6, 925 (1973)" and are a meso fraction, a racemic fraction, and a racemic-meso-racemic-meso fraction, respectively in the pentad units of the polypropylene molecular chain that are measured based on a signal of the methyl group in the $^{13}$C-NMR spectrum. As the [mmmm] increases, the stereoregularity increases. In addition, the [mm], [rr], and [mr] as described later are also calculated by the above-described method.

In addition, the polypropylene (MA) which is used in the present invention is preferably one satisfying the following (a) to (e):

(a) rrrr/(1 - mmmm) $\leq$ 0.1,
(b) [rmrm] > 2.5 mol%,
(c) [mm] x [rr]/[mr]$^2$$\leq$ 2.0,
(d) weight average molecular weight (Mw) = 10,000 to 200,000, and
(e) molecular weight distribution (Mw/Mn) <4.0.

(a) rrrr/(1 - mmmm) $\leq$ 0.1

In the polypropylene (A) which is used in the present invention, the rrrr/(1 - mmmm) is preferably 0.1 or less. The rrrr/(1 - mmmm) is an index indicating the uniformity of regularity distribution of the polypropylene (A). When this value becomes large, a mixture of a high-stereoregularity polypropylene and an atactic polypropylene is obtained as in the case of a conventional polypropylene produced by using an existing catalyst system, thereby causing stickiness. From such a viewpoint, the rrrr/(1 - mmmm) is preferably 0.05 or less, and more preferably 0.04 or less.

While both the above-described mmmm and [mmmm] indicate a meso pentad fraction in terms of a molar ratio, there is a difference therebetween from the standpoint that the mmmm indicates a ratio itself, whereas the [mmmm] indicates a percentage thereof. Accordingly, the matter that the mmmm is 0.5 is synonymous with the matter that the [mmmm] is 50 mol%. The same is also applicable to the rrrr and [rrrr] and so on.

(b) [rmrm] > 2.5 mol%

In the polypropylene (A) which is used in the present invention, the [rmrm] (racemic-meso-racemic-meso pentad fraction) is preferably more than 2.5 mol%. When the [rmrm] is 2.5 mol% or less, randomness of the polypropylene (A) is reduced, a degree of crystallization is increased due to crystallization by an isotactic polypropylene block chain, and end breakage is liable to occur. From such a viewpoint, the [rmrm] of the polypropylene (A) is more preferably 2.6 mol% or more. An upper limit thereof is typically about 10 mol%.

(c) [mm] x [rr]/[mr]$^2$≤ 2.0

In the polypropylene (A) which is used in the present invention, the [mm] (meso triad fraction) x [rr] (racemic triad fraction)/[mr] (meso racemic triad fraction)$^2$ is preferably 2.0 or less. The [mm] x [rr]/[mr]$^2$ indicates an index of randomness of the polymer, and as the value decreases, the randomness becomes high, and end breakage and stickiness are suppressed. From such a viewpoint, the [mm] x [rr]/[mr]$^2$ is more preferably 0.25 to 1.9, and still more preferably 0.5 to 1.7.

(d) Weight average molecular weight (Mw) = 10,000 to 200,000

In the polypropylene (A) which is used in the present invention, the weight average molecular weight is 10,000 to 200,000. When the weight average molecular weight is 10,000 or more, the viscosity of the polypropylene (A) is not excessively low but is appropriate, and therefore, end breakage upon spinning is suppressed. In addition, when the weight average molecular weight is 200,000 or less, the viscosity of the polypropylene (A) is not excessively high, and spinnability is improved. From such a viewpoint, the weight average molecular weight (Mw) of the polypropylene (A) is more preferably 20,000 to 100,000, and still more preferably 30,000 to 80,000.

(e) Molecular weight distribution (Mw/Mn) < 4.0

In the polypropylene (A) which is used in the present invention, the molecular weight distribution (Mw/Mn) is preferably less than 4.0. When the molecular weight distribution is less than 4.0, the generation of stickiness in fibers obtained by spinning is suppressed. This molecular weight distribution is more preferably 3.0 or less, and still more preferably 2.5 or less.

As the polypropylene (A) which is used in the present invention, a propylene homopolymer is preferably used. However, the polypropylene (A) may also be a copolymer using a comonomer other than propylene within the range where the object of the present invention is not impaired. In this case, an amount of the comonomer is typically 2% by mass or less. Examples of the comonomer include ethylene, 1-butene, 1-pentene, 4-methyl-1-pentene, 1-hexene, 1-octene, 1-decene, 1-dodecene, 1-tetradecene, 1-hexadecene, 1-octadecene, 1-eicosene, and the like. In the present invention, one or two or more kinds of these monomers can be used.

As a method of producing the polypropylene (A) which is used in the present invention, there is exemplified a method of using a metallocene catalyst. The metallocene catalyst is, for example, a metallocene catalyst obtained by combining (A) a transition metal compound in which a crosslinked structure is formed through two crosslinking groups and (B) a promoter. Specifically, examples thereof include a catalyst for polymerization containing (A) a transition metal compound represented by the general formula (I) and (B) a promoter component selected from among (B-1) a compound capable of reacting with the transition metal compound that is the component (A) or a derivative thereof to form an ionic complex and (B-2) an aluminoxane.

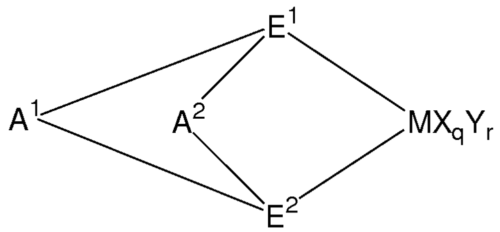

··· (I)

[In the formula, M represents a metal element belonging to any one of the Groups 3 to 10 or the lanthanoid series in the periodic table; each of $E^1$ and $E^2$ represents a ligand selected from a substituted cyclopentadienyl group, an indenyl group, a substituted indenyl group, a heterocyclopentadienyl group, and a substituted heterocyclopentadienyl group, and forms a crosslinked structure via $A^1$ and $A^2$, and $E^1$ and $E^2$ may be the same as or different from each other;

X represents a σ-bonding ligand, and when a plurality of Xs are present, the plurality of Xs may be the same as or different from each other, and each X may crosslink with any other X, $E^1$, $E^2$, or Y; Y represents a Lewis base, and when a plurality of Ys are present, the plurality of Ys may be the same as or different from each other, and each Y may crosslink with any other Y, $E^1$, $E^2$, or X; each of $A^1$ and $A^2$ represents a divalent crosslinking group that bonds two ligands to each other and represents a hydrocarbon group having 1 to 20 carbon atoms, a halogen-containing hydrocarbon group having 1 to 20 carbon atoms, a silicon-containing group, a germanium-containing group, a tin-containing group, -O-,-CO-, -S-, $-SO_2-$, -Se-, $-NR^1-$, $-PR^1-$, $-P(O)R^1-$, $-BR^1-$, or $-AlR^1-$, wherein $R^1$ represents a hydrogen atom, a halogen atom, a hydrocarbon group having 1 to 20 carbon atoms, or a halogen-containing hydrocarbon group having 1 to 20 carbon atoms, and may be the same as or different from each other; q represents an integer of 1 to 5 and corresponds to [(valence of M) - 2]; and r represents an integer of 0 to 3.]

Specific examples of the transition metal compound represented by the general formula (I) include (1,2'-dimethylsilylene)(2,1'-dimethylsilylene)bis(3-n-butylindenyl)zirconium dichloride, (1,2'-dimethylsilylene)(2,1'-dimethylsilylene)bis(3-trimethylsilylmethylindenyl)zirconium dichloride, (1,2'-dimethylsilylene)(2,1'-dimethylsilylene)bis(3-phenylindenyl)zirconium dichloride, (1,2'-dimethylsilylene)(2,1'-dimethylsilylene)bis(4,5-benzoindenyl)zirconium dichloride, (1,2'-dimethylsilylene)(2,1'-dimethylsilylene)bis(4-isopropylindenyl)zirconium dichloride, (1,2'-dimethylsilylene)(2,1'-dimethylsilylene)bis(5,6-dimethylindenyl)zirconium dichloride, (1,2'-dimethylsilylene)(2,1'-dimethylsilylene)bis(4,7-diisopropylindenyl)zirconium dichloride, (1,2'-dimethylsilylene)(2,1'-dimethylsilylene)bis(4-phenylindenyl)zirconium dichloride, (1,2'-dimethylsilylene)(2,1'-dimethylsilylene)bis(3-methyl-4-isopropylindenyl)zirconium dichloride, (1,2'-dimethylsilylene)(2,1'-dimethylsilylene)bis(5,6-benzoindenyl)zirconium dichloride, (1,2'-dimethylsilylene)(2,1'-isopropylidene)-bis(indenyl)zirconium dichloride, (1,2'-dimethylsilylene)(2,1'-isopropylidene)-bis(3-methylindenyl)zirconium dichloride, (1,2'-dimethylsilylene)(2,1'-isopropylidene)-bis(3-isopropylindenyl)zirconium dichloride, (1,2'-dimethylsilylene)(2,1'-isopropylidene)-bis(3-n-butylindenyl)zirconium dichloride, (1,2'-dimethylsilylene)(2,1'-isopropylidene)-bis(3-trimethylsilylmethylindenyl)zirconium dichloride, and the like, and compounds obtained by substituting zirconium with titanium or hafnium in those compounds.

Other examples of the transition metal compound in the metallocene catalyst may include dichloro[dimethylsilylene(cyclopentadienyl)(2,4-dimethyl-4H-1-azulenyl)]hafnium, dichloro[dimethylsilylene(cyclopentadienyl)(2,4-dimethyl-4H-5,6,7,8-tetrahydro-1-azulenyl)]hafnium, dichloro[dimethylsilylene(cyclopentadienyl)(2-ethyl-4-methyl-4H-1-azulenyl)]hafnium, dichloro[dimethylsilylene(cyclopentadienyl)(2-ethyl-4-methyl-4H-5,6,7,8-tetrahydro-1-azulenyl)]hafnium, dichloro[dimethylsilylene(9-fluorenyl)(2,4-dimethyl-4H-1-azulenyl)]hafnium, dichloro[dimethylsilylene(cyclopentadienyl)(2-n-propyl-4-methyl-4H-1-azulenyl)]hafnium, dichloro[dimethylsilylene(cyclopentadienyl)(2-isopropyl-4-methyl-4H-1-azulenyl)]hafnium, dichloro [dimethylgermirene(cyclopentadienyl)(2,4-dimethyl-4H-1-azulenyl)]hafnium, and metallocene compounds obtained by substituting a metal atom with zirconium in those compounds. Furthermore, there are exemplified dimethylsilylene(2-methyl-4-phenyl-indenyl)(2-(2-furyl)-4-phenyl-indenyl)zirconium dichloride, dimethylsilylene(2-methyl-4-phenyl-4-hydroazulenyl)(2-(2-(5-methyl)-furyl)-4-phenyl-4-hydroazulenyl)zirconium dichloride, dimethylsilylene(2-methyl-4-phenyl-4-hydroazulenyl)(2-methyl-4-(2-(5-methyl)-thienyl)-4-hydroazulenyl)zirconium dichloride, dimethylsilylene(2-methyl-benzoindenyl)(2-(2-(5-methyl)-furyl)-benzoindenyl)zirconium dichloride, dimethylsilylene(2-methyl-4-(2-thienyl)-indenyl)(2-isopropyl-4-(2-thienyl)-indenyl)zirconium dichloride, dimethylsilylene(2-methyl-4-(2-(5-methyl)-thienyl)-indenyl)(2-isopropyl-4-(2-(5-methyl)-thienyl)-indenyl)zirconium dichloride, dimethylsilylene(2-methyl-4-(2-(5-t-butyl)-thienyl)-indenyl)(2-isopropyl-4-(2-(5-t-butyl)-thienyl)-indenyl)zirconium dichloride, and metallocene compounds obtained by substituting an indenyl skeleton with a tetrahydroindenyl skeleton in those compounds.

Next, examples of the component (B-1) of the component (B) include dimethylanilinium tetrakispentaflourophenylborate, triethylammonium tetraphenylborate, tri-n-butylammonium tetraphenylborate, trimethylammonium tetraphenylborate, tetraethylammonium tetraphenylborate, methyl(tri-n-butyl)ammonium tetraphenylborate, benzyl(tri-n-butyl)ammonium tetraphenylborate, and the like.

One kind of the components (B-1) may be used, or two or more kinds thereof may also be used in combination. Meanwhile, examples of the aluminoxane as the component (B-2) include methylaluminoxane, ethylaluminoxane, isobutylaluminoxane, and the like. One kind of those aluminoxanes may be used, or two or more kinds thereof may also be used in combination. In addition, one or more kinds of the above-described components (B-1) and one or more kinds of the above-described components (B-2) may be used in combination.

As the above-described catalyst for polymerization, an organic aluminum compound can be used as a component (C) in addition to the above-described components (A) and (B). Here, examples of the organic aluminum compound as the component (C) include trimethylaluminum, triethylaluminum, triisopropylaluminum, triisobutylaluminum, dimethylaluminum chloride, diethylaluminum chloride, methylaluminum dichloride, ethylaluminum dichloride, dimethylaluminum fluoride, diisobutylaluminum hydride, diethylaluminum hydride, ethylaluminum sesquichloride, and the like. One kind of those organic aluminum compounds may be used, or two or more kinds thereof may also be used in combination. Here, upon polymerization of propylene, at least one kind of the catalyst components can be used while being supported on a proper carrier.

The polymerization method is not particularly limited, and any methods, such as a slurry polymerization method, a vapor phase polymerization method, a bulk polymerization method, a solution polymerization method, a suspension polymerization method, etc., may be adopted. Of those, a bulk polymerization method and a solution polymerization method are especially preferred. A polymerization temperature is typically -100 to 250°C, and with regard to a use ratio of the catalyst to the reaction raw material, a molar ratio of the raw material monomer to the above-described component (A) is preferably 1 to $10^8$, and especially preferably 100 to $10^5$. Furthermore, a polymerization time is typically 5 minutes to 10 hours, and a reaction pressure is typically atmospheric pressure to 20 MPa (gauge).

[Polypropylene (B)]

The polypropylene (B) which is used in the present invention may be one whose [mmmm] falls outside the range of that of the polypropylene (A). Accordingly, in the case where the polypropylene (A) is defined as one whose [mmmm] is 20 to 60 mol%, the polypropylene (B) is defined as one whose [mmmm] is less than 20 mol% or more than 60 mol%.

Specific examples of the polypropylene (B) include a propylene homopolymer, a propylene random copolymer, a propylene block copolymer, and the like. In the polypropylene (B), its melt flow rate (MFR) is typically 10 to 2,000 g/10 min, preferably 15 to 1,600 g/10 min, and more preferably 20 to 1,500 g/10 min, and its melting point is typically 150 to 167°C, and preferably 155 to 165°C.

The melt flow rate (MFR) as referred to in the present specification indicates one as measured under conditions at a temperature of 230°C and a load of 21.18 N in conformity with JIS K7210.

[Polypropylene-based resin composition]

A content of the polypropylene (A) in the polypropylene-based resin composition which is used in the present invention is preferably 5 to 50% by mass on the basis of a total sum of the polypropylene (A) and the polypropylene (B). When the content of the polypropylene (A) is less than 5% by mass, it is difficult to achieve the reduction of a denier value of the fibers without increasing the shot number. From such a viewpoint, the content of the polypropylene (A) is more preferably 10 to 50% by mass, and still more preferably 20 to 50% by mass.

The polypropylene-based resin composition which is used in the present invention is a resin composition having a melt flow rate of 10 to 2,000 g/10 min and a melting endotherm ($\Delta H$) of 50 to 95 J/g.

When the melt flow rate of the polypropylene-based resin composition is less than 10 g/10 min, spinnability is lowered. Meanwhile, when the melt flow rate is more than 2,000 g/10 min, end breakage is liable to occur in the nonwoven fabric molding process. From such a viewpoint, the melt flow rate of the polypropylene-based resin composition is preferably 15 to 1,900 g/10 min, and more preferably 20 to 1,800 g/10 min.

The above-described melt flow rate indicates one as measured under conditions at a temperature of 230°C and a load of 21.18 N in conformity with JIS K7210.

When the melting endotherm of the above-described polypropylene-based resin composition is less than 50 J/g, the crystallization of the resin composition is slow, so that the filter is liable to become sticky. Meanwhile, when the melting endotherm is more than 95 J/g, the crystallization is fast, so that the polypropylene-based resin composition becomes brittle and is liable to generate a shot to be caused due to end breakage. From such a viewpoint, the melting endotherm of the polypropylene-based resin composition is preferably 65 to 93 J/g, and more preferably 75 to 90 J/g.

The above-described melting endotherm ($\Delta H$) indicates one calculated from a melting endothermic curve obtained by holding 10 mg of a sample under a nitrogen atmosphere at -10°C for 5 minutes and then raising the temperature at a rate of 10°C/min with a differential scanning calorimeter (DSC-7 manufactured by PerkinElmer, Inc.).

A total content of the polypropylene (A) and the polypropylene (B) which the polypropylene-based resin composition contains is preferably 50% by mass or more, more preferably 70% by mass or more, and still more preferably 90% by mass or more.

The polypropylene-based resin composition may contain any other thermoplastic resin or an additive.

Examples of the any other thermoplastic resin include olefin-based polymers. Specifically, examples thereof include a polypropylene, a propylene-ethylene copolymer, a propylene-ethylene-diene copolymer, a polyethylene, an ethylene/$\alpha$-olefin copolymer, an ethylene-vinyl acetate copolymer, a hydrogenated styrene-based elastomer, and the like. One kind of those thermoplastic resins may be used alone, or two or more kinds thereof may also be used in combination.

As the additive, any conventionally known additives may be compounded. Examples of the additive include a foaming agent, a crystal nucleating agent, a weatherability stabilizer, a UV absorber, a light stabilizer, a heat resistance stabilizer, an antistatic agent, a release agent, a flame retardant, a synthetic oil, a wax, an electric property-improving agent, a slip inhibitor, an anti-blocking agent, a viscosity-controlling agent, a coloring inhibitor, a defogging agent, a lubricant, a pigment, a dye, a plasticizer, a softening agent, an age resistor, a hydrochloric acid-absorbing agent, a

chlorine scavenger, an antioxidant, an antitack agent, and the like.

[Filter]

The filter according to the present invention is one obtained by using the above-described polypropylene-based resin composition as a raw material and is preferably one in a nonwoven fabric form. By using the polypropylene-based resin composition, even in the case of utilizing a meltblown method for the purpose of achieving reduction of a denier value of the fibers, the filter can be produced without causing any shot, and a high-quality filter is obtained.

Typically, in the meltblown method, a molten resin is extruded from a nozzle and then brought into contact with a high-speed heated gas flow to provide fine fibers, and the fine fibers are collected on a movable collecting surface, thereby obtaining a filter in a nonwoven fabric form.

Conditions for the production of the filter of the present invention are, for example, a melting temperature of the resin of 220 to 270°C, a single-hole discharge amount of 0.1 to 0.5 g/min, and a temperature and flow rate of the heated gas flow of 250 to 280°C and 200 to 600 $m^3$/hr, and are preferably a melting temperature of the resin of 220 to 260°C, a single-hole discharge amount of 0.1 to 0.3 g/min, and a temperature and flow rate of the heated gas flow of 250 to 270°C and 250 to 550 $m^3$/hr.

The filter produced by the meltblown method has good texture because an average diameter of its fibers is generally small. In particular, in the present invention, by using the above-described polypropylene-based resin composition, the diameter of fibers can be made small without causing any shot, and a filter constituted of fibers having an average diameter of, for example, about 1.0 $\mu$m can be stably produced. In addition, a filter having excellent dispersibility of fibers and having a small mesh size can be produced.

In addition, the filter of the present invention is preferably produced by a molding apparatus provided with a biax system. The biax system is characterized by multiple-row spinning nozzles and air holes concentrically provided for the purpose of improving productivity, efficiency, and quality. The biax system can withstand a high resin pressure in a spinneret capable of undergoing a motion in a wide range and is able to perform spinning with a treatment capacity of 3 to 5 times as compared with the conventional meltblown system.

A basis weight of the filter of the present invention is typically 7 to 100 g/$m^2$, preferably 10 to 70 g/$m^2$, still more preferably 10 to 50 g/$m^2$, and especially preferably 20 to 40 g/$m^2$.

[Filter laminate]

The filter of the present invention can be used as one layer of a filter laminate, and the laminate is, for example, a filter laminate obtained by laminating a meltblown filter (M) obtained by a meltblown method and a spunbonded filter (S) obtained by a spunbond method. The filter laminate including such an SM structure composed of spunbonded filter layer/meltblown filter layer shows excellent flexibility. In addition, the filter laminate may also be a laminate obtained by repetition of the SM structure. Furthermore, the filter laminate may also be a laminate having a structure in which the layer of the spunbonded filter (S) exists on the both sides of the layer of the meltblown filter (M) (that is, a filter laminate of an SMS structure of spunbonded filter layer/meltblown filter layer/spunbonded filter layer), and the SMS structure may be repeated. The filter laminate of an SMS structure is preferred in terms of a balance between strength and flexibility of the laminate. A basis weight of the filter laminate of an SMS structure is typically 7 to 100 g/$m^2$, preferably 10 to 70 g/$m^2$, more preferably 10 to 50 g/$m^2$, and especially preferably 20 to 40 g/$m^2$.

A material for the spunbonded filter layer is not particularly limited, and examples thereof include a polyethylene, a polypropylene, a polyester, and the like.

The production of the above-described filter laminate may be performed in accordance with any method without any particular limitation so long as the method includes laminating a spunbonded filter and a meltblown filter and integrating the both, whereby a laminate can be formed. For example, a method including directly depositing fibers formed by the meltblown method on a spunbonded filter to form a meltblown filter and then fusing the spunbonded filter and the meltblown filter; a method including superimposing a spunbonded filter and a meltblown filter and then fusing the both filters by heating and pressurization; a method including bonding a spunbonded filter and a meltblown filter with an adhesive, such as a hot-melt adhesive, a solvent-based adhesive, etc.; and the like can be adopted.

The method including directly forming a meltblown filter on a spunbonded filter can be performed by a meltblown method including spraying a molten material of the above-described polypropylene-based resin composition on the surface of the spunbonded filter, thereby depositing fibers. At this time, the fibers formed by the meltblown method are sprayed and deposited while setting the surface opposite to the surface on the side where the molten product is sprayed onto the spunbonded filter to a negative pressure. At the same time, the spunbonded filter and the meltblown filter are integrated to obtain a flexible filter laminate having the spunbonded filter layer and the meltblown filter layer. In the case where the integration of the both filters is insufficient, the filters can be sufficiently integrated by a heating and pressurizing emboss roll or the like.

Examples of the method including fusing a spunbonded filter and a meltblown filter by heat fusion include a method including subjecting the entirety of the contact surface of the spunbonded filter and the meltblown filter to heat fusion; and a method including subjecting a part of the contact surface of the spunbonded filter and the meltblown filter to heat fusion. In the present invention, the spunbonded filter and the meltblown filter are preferably fused by a heat embossing method. In this case, a fusing area accounts for 5 to 35%, and preferably 10 to 30% of the contact area of the spunbonded filter and the meltblown filter. When the fusing area falls within the foregoing range, the resulting filter laminate is excellent in terms of a balance between release strength and flexibility.

The filter or filter laminate of the present invention is preferably subjected to an electrostatic treatment.

The electrostatic treatment may be performed according to any methods and is not particularly limited. For example, the electrostatic method may be performed according to any methods, such as a method including allowing the filter to pass between a pair of electrodes impressed with a direct current voltage, a method including applying corona discharge or a pulse-like high voltage on the surface of the filter, a method of including holding the front and back both surfaces by other dielectric substance of the filter and applying a direct current high voltage, etc. It is especially preferred to apply a corona treatment.

The following fiber products can be given as examples of a fiber product using the filter or filter laminate of the present invention. That is, there can be exemplified a member for a disposable diaper, a stretchable member for a diaper cover, a stretchable member for a sanitary product, a stretchable member for a hygienic product, a stretchable tape, an adhesive bandage, a stretchable member for clothing, an insulating material for clothing, a heat insulating material for clothing, a protective suit, a hat, a mask, a glove, a supporter, a stretchable bandage, a base fabric for a fomentation, a non-slip base fabric, a vibration absorber, a finger cot, an air conditioner filter, an air filter for a clean room, an electret filter subjected to electret processing, a separator, a heat insulator, a coffee bag, a food packaging material, a ceiling skin material for an automobile, an acoustic insulating material, a cushioning material, a speaker dust-proof material, an air cleaner material, an insulator skin, a backing material, an adhesive non-woven fabric sheet, various members for automobiles such as a door trim, various cleaning materials such as a cleaning material for a copying machine, the facing and backing of a carpet, an agricultural beaming, a timber drain, members for shoes such as a sport shoe skin, a member for a bag, an industrial sealing material, a wiping material, a sheet, and the like. In particular, the filter of the present invention is preferably used for a mask or an air conditioner filter.

Examples

Production Example 1 [Production of polypropylene (A)]

5.2 $m^3$/h of n-heptane, 0.6 mol/h of triisobutylaluminum, and furthermore, 0.7 mmol/h in terms of zirconium of a catalyst component obtained by bring dimethylanilinium tetrakispentaflourophenylborate, (1,2'-dimethylsilylene)(2,1'-dimethylsilylene)-bis(3-trimethylsilylmethylindenyl)zirconium dichloride, triisobutylaluminum, and propylene into contact with each other in advance were continuously supplied to a stirrer-equipped stainless steel-made reactor having an internal volume of 68 $m^3$.

Propylene and hydrogen were continuously supplied so as to keep a hydrogen concentration in the vapor phase portion and a total pressure in the reactor at 5.0 mol% and 1.7 MPa · G, respectively at a polymerization temperature of 85°C.

IRGANOX 1010 (a trade name, manufactured by BASF SE) was added to the resulting polymerization solution such that its content in the polymerization solution was 1,000 ppm, and the solvent was removed, thereby obtaining a propylene homopolymer (polypropylene (A)).

The obtained polypropylene (A) had a weight average molecular weight (Mw) of 49,000 and a molecular weight distribution (Mw/Mn) of 2.0. In addition, a [mmmm] was 47 mol%, a rrrr/(1 - mmmm) was 0.038, a [rmrm] was 2.6 mol%, and a [mm] x [rr]/$[mr]^2$ was 1.5, all of which were determined from the NMR measurement.

The above-described physical properties were determined by the following measurements.

[Measurements of weight average molecular weight (Mw) and molecular weight distribution (Mw/Mn)]

The weight average molecular weight (Mw) and the molecular weight distribution (Mw/Mn) were determined by a gel permeation chromatography (GPC) method. The following device and conditions were used in the measurements, and the weight average molecular weight as converted into polystyrene was obtained.

<GPC Measuring device>

Column: TOSO GMHHR-H(S)HT
Detector: RI detector for liquid chromatography, WATERS 150C

<Measurement conditions>

Solvent: 1,2,4-trichlorobezene
Measurement temperature: 145°C
Flow rate: 1.0 mL/min
Sample concentration: 2.2 mg/mL
Injection amount: 160 μL
Calibration curve: Universal Calibration
Analysis program: HT-GPC (ver. 1.0)

[NMR measurement]

The $^{13}C$-NMR spectrum was measured with the following device under the following conditions. The peak assignment followed the method proposed by A. Zambelli, et al., "Macromolecules, 8, 687 (1975)".
Device: $^{13}C$-NMR apparatus, JNM-EX400 series, manufactured by JEOL, Ltd.
Method: Proton complete decoupling method
Concentration: 220 mg/mL
Solvent: Mixed solvent of 1,2,4-trichlorobenzene and deuterated benzene in a ratio of 90/10 (volume ratio)
Temperature: 130°C
Pulse width: 45°
Pulse repetition time: 4 seconds
Accumulation: 10,000 times

<Calculating expressions>

$$M = m/S \times 100$$

$$R = \gamma/S \times 100$$

$$S = P\beta\beta + P\alpha\beta + P\alpha\gamma$$

S: Signal intensity of carbon atoms in side chain methyl of all the propylene units
$P\beta\beta$: 19.8 to 22.5 ppm
$P\alpha\beta$: 18.0 to 17.5 ppm
$P\alpha\gamma$: 17.5 to 17.1 ppm
$\gamma$: Racemic pentad chain, 20.7 to 20.3 ppm
m: Mesopentad chain, 21.7 to 22.5 ppm
The mesopentad fraction [mmmm], the racemic pentad fraction [rrrr], and the racemic-meso-racemic-meso pentad fraction [rmrm] are determined in conformity with the method proposed by A. Zambelli, et al., "Macromolecules, 6, 925 (1973)" and are a meso fraction, a racemic fraction, and a racemic-meso-racemic-meso fraction, respectively in the pentad units of the polypropylene molecular chain that are measured based on a signal of the methyl group in the $^{13}C$-NMR spectrum. As the mesopentad fraction [mmmm] increases, the stereoregularity increases. In addition, the triad fractions [mm], [rr], and [mr] were also calculated by the above-described method.

Example 1

(Preparation of polypropylene-based resin composition)

5% by mass of the polypropylene (A) obtained in Production Example 1 and 95% by mass of a polypropylene (B) (ACHIEVE (registered trademark) 6936G1 resin, manufactured by ExxonMobil Corporation.) having an MFR of 1,550 g/10 min were mixed to obtain a polypropylene-based resin composition.

(Measurement of melt flow rate)

The above-described polypropylene-based resin composition was measured under conditions at a temperature of 230°C and a load of 21.18 N in conformity with JIS K7210.

(Measurement of DSC)

A melting endotherm ΔH was calculated from a melting endothermic curve obtained by holding 10 mg of a sample under a nitrogen atmosphere at - 10°C for 5 minutes and then raising the temperature at a rate of 10°C/min with a differential scanning calorimeter (DSC-7, manufactured by PerkinElmer, Inc.).

(Production of filter)

The above-described polypropylene-based resin composition was used as a raw material, and a filter was molded by using a biax meltblown nonwoven fabric apparatus composed of a single-screw extruder having a screw diameter of 25.4 mm, a die (hole diameter: 0.23 mm, hole number: 732 holes in total (4 rows and 183 holes per row)), a high-temperature compressed air generator, and a winding device.

The raw material was melted at a resin temperature of 260°C, the molten resin was discharged from the die at a rate of 0.066 g/min per single hole under conditions at a DCD (distance from the nozzle to the conveyor) of 400 mm, and the resin was sprayed on a net conveyor with compressed air at 270°C at a flow rate of 250 $m^3$/hr and a line speed of 6.1 m/min, thereby setting a basis weight of the filter to 20 gsm. Thereafter, this filter was subjected to a corona discharge treatment.

This filter was measured for collecting efficiency and pressure loss according to the following measuring method. The measurement results are shown in Table 1.

(Measurement of collecting efficiency and pressure loss of the filter)

NaCl particles of 0.3 μm generated from an atomizer for NaCl particle generation were allowed to pass through a 100 $cm^2$ filter at a flow rate of 32 LPM with an automated filter tester, manufactured by TSI Inc. and measured for a particle concentration with a laser type particle detector placed on the upstream and downstream of the filter, respectively. In addition, a pressure loss was simultaneously measured between the upstream and the downstream of the filter.

Example 2

A meltblown filter was produced in the same manner as that in Example 1, except that in Example 1, a polypropylene-based resin composition composed of 10% by mass of the polypropylene (A) and 90% by mass of the polypropylene (B) was used, and the discharge rate from the die was changed to 0.068 g/min per single hole. Measurement results of the collecting efficiency and pressure loss of this filter are shown in Table 1.

Example 3

A meltblown filter was produced in the same manner as that in Example 1, except that in Example 1, a polypropylene-based resin composition composed of 20% by mass of the polypropylene (A) and 80% by mass of the polypropylene (B) was used, the discharge rate from the die was changed to 0.067 g/min per single hole, and the DCD (distance from the nozzle to the conveyor) was changed to 500 mm. Measurement results of the collecting efficiency and pressure loss of this filter are shown in Table 1.

Example 4

A meltblown filter was produced in the same manner as that in Example 1, except that in Example 1, the line speed was changed to 3.9 m/min, thereby setting a basis weight of the filter to 30 gsm. Measurement results of the collecting efficiency and pressure loss of this filter are shown in Table 1.

Example 5

A meltblown filter was produced in the same manner as that in Example 4, except that in Example 4, a polypropylene-based resin composition composed of 10% by mass of the polypropylene (A) and 90% by mass of the polypropylene (B) was used, and the discharge rate from the die was changed to 0.068 g/min per single hole. Measurement

results of the collecting efficiency and pressure loss of this filter are shown in Table 1.

Example 6

A meltblown filter was produced in the same manner as that in Example 4, except that in Example 4, a polypropylene-based resin composition composed of 20% by mass of the polypropylene (A) and 80% by mass of the polypropylene (B) was used, the discharge rate from the die was changed to 0.067 g/min per single hole, and DCD was changed to 500 mm. Measurement results of the collecting efficiency and pressure loss of this filter are shown in Table 1.

Comparative Example 1

A meltblown filter was produced in the same manner as that in Example 1, except that in Example 1, the polypropylene (A) was not added, a resin composed of only the polypropylene (B) was used as the raw material, and the discharge rate from the die was changed to 0.064 g/min per single hole. Measurement results of the collecting efficiency and pressure loss of this filter are shown in Table 1.

Comparative Example 2

A meltblown filter was produced in the same manner as that in Comparative Example 1, except that in Comparative Example 1, the line speed was changed to 3.9 m/min, thereby setting a basis weight of the filter to 30 gsm. Measurement results of the collecting efficiency and pressure loss of this filter are shown in Table 1.

Comparative Example 3

A meltblown filter was produced in the same manner as that in Comparative Example 1, except that in Comparative Example 1, the line speed was changed to 2.5 m/min, thereby setting a basis weight of the filter to 50 gsm. Measurement results of the collecting efficiency and pressure loss of this filter are shown in Table 1.

Table 1

| | Polypropylene (A) | Polypropylene (B) | MFR | Melting endotherm ΔH | Line speed | Basis weight | Collecting efficiency | Pressure loss |
|---|---|---|---|---|---|---|---|---|
| | % by mass | % by mass | g/10 min | J/g | m/min | $g/m^2$ | % | Pa |
| Example 1 | 5 | 95 | 1570 | 86 | 6.1 | 20 | 95.05 | 4.0 |
| Example 2 | 10 | 90 | 1590 | 81 | 6.1 | 20 | 95.32 | 3.9 |
| Example 3 | 20 | 80 | 1631 | 72 | 6.1 | 20 | 96.24 | 4.1 |
| Comparative Example 1 | 0 | 100 | 1550 | 90 | 6.1 | 20 | 94.83 | 3.6 |
| Example 4 | 5 | 95 | 1570 | 86 | 3.9 | 30 | 95.86 | 5.4 |
| Example 5 | 10 | 90 | 1590 | 81 | 3.9 | 30 | 96.06 | 5.3 |
| Example 6 | 20 | 80 | 1631 | 72 | 3.9 | 30 | 99.10 | 5.9 |
| Comparative Example 2 | 0 | 100 | 1550 | 90 | 3.2 | 30 | 95.54 | 5.2 |
| Comparative Example 3 | 0 | 100 | 1550 | 90 | 2.5 | 50 | 99.24 | 8.7 |

In comparison of Examples 1 to 3 with Comparative Example 1 having the same basis weight, it can be confirmed that the filters obtained in Examples 1 to 3 have high in terms of collecting efficiency and are decreased in terms of a pressure loss. The same is also applicable to the comparison of Examples 4 to 6 with Comparative Example 2.

Industrial Applicability

The filter of the present invention is made compatible with respect to the collecting property and the air permeability, and in particular, it is preferably used for fiber products, such as a mask, an air conditioner filter, etc.

## Claims

**1.** A filter comprising a polypropylene-based resin composition satisfying the following (1) to (3):

(1) a melt flow rate is 10 to 2,000 g/10 min,
(2) a melting endotherm $\Delta H$ as measured by a differential scanning calorimeter is 50 to 95 J/g, and
(3) a polypropylene (A) having [mmmm] of 20 to 60 mol% is contained.

**2.** The filter according to claim 1, wherein the polypropylene (A) satisfies the following (a) to (e):

(a) $rrrr/(1 - mmmm) \leq 0.1$,
(b) $[rmrm] > 2.5$ mol%,
(c) $[mm] \times [rr]/[mr]^2 \leq 2.0$,
(d) weight average molecular weight (Mw) = 10,000 to 200,000, and
(e) molecular weight distribution $(Mw/Mn) < 4.0$.

**3.** The filter according to claim 1 or 2, wherein the polypropylene-based resin composition further contains a polypropylene (B) other than the polypropylene (A).

**4.** The filter according to any one of claims 1 to 3, wherein a content of the polypropylene (A) in the polypropylene-based resin composition is 5 to 50% by mass on the basis of a total sum of the polypropylene (A) and the polypropylene (B).

**5.** The filter according to any one of claims 1 to 4, wherein a total content of the polypropylene (A) and the polypropylene (B) which the polypropylene-based resin composition contains is 50% by mass or more.

**6.** The filter according to any one of claims 1 to 5, wherein a basis weight is 7 to 100 $g/m^2$.

**7.** The filter according to any one of claims 1 to 6, comprising a nonwoven fabric produced using the polypropylene-based resin composition by a meltblown method.

**8.** The filter according to any one of claims 1 to 7, having been subjected to an electrostatic treatment.

**9.** The filter according to claim 8, wherein the electrostatic treatment is a corona treatment.

**10.** A filter laminate including the filter according to any one of claims 1 to 9.

**11.** A fiber product having the filter according to any one of claims 1 to 9 or the filter laminate according to claim 10.

**12.** A mask having the filter according to any one of claims 1 to 9 or the filter laminate according to claim 10.

**13.** An air conditioner filter having the filter according to any one of claims 1 to 9 or the filter laminate according to claim 10.

**INTERNATIONAL SEARCH REPORT**

International application No.
PCT/JP2014/056781

A. CLASSIFICATION OF SUBJECT MATTER
*B01D39/16*(2006.01)i, *B03C3/28*(2006.01)i, *C08F10/06*(2006.01)i, *C08L23/12*(2006.01)i, *D04H3/16*(2006.01)i

According to International Patent Classification (IPC) or to both national classification and IPC

B. FIELDS SEARCHED

Minimum documentation searched (classification system followed by classification symbols)
B01D39/00-41/04, D04H1/00-18/04

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2014 |
| Kokai Jitsuyo Shinan Koho | 1971-2014 | Toroku Jitsuyo Shinan Koho | 1994-2014 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X<br>Y | WO 2011/090132 A1 (Idemitsu Kosan Co., Ltd.), 28 July 2011 (28.07.2011), claims 1 to 4; paragraphs [0007] to [0015], [0025] to [0067]; tables 1 to 3 & JP 2011-168944 A & US 2012/0302982 A1 & EP 2527508 A1 | 1-8,10-13<br>9 |
| X<br>Y | WO 2011/030893 A1 (Idemitsu Kosan Co., Ltd.), 17 March 2011 (17.03.2011), claims 1 to 7; paragraphs [0010] to [0018], [0027] to [0061]; tables 1 to 7 & US 2012/0208422 A1 & EP 2479331 A1 | 1-6,8,10-13<br>9 |
| Y | JP 2013-040412 A (JNC Corp.), 28 February 2013 (28.02.2013), paragraphs [0017], [0027] & WO 2013/024770 A1 | 9 |

☒ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 02 June, 2014 (02.06.14) | 17 June, 2014 (17.06.14) |

| Name and mailing address of the ISA/ | Authorized officer |
|---|---|
| Japanese Patent Office | |
| Facsimile No. | Telephone No. |

Form PCT/ISA/210 (second sheet) (July 2009)

**INTERNATIONAL SEARCH REPORT**

International application No.
PCT/JP2014/056781

C (Continuation). DOCUMENTS CONSIDERED TO BE RELEVANT

| Category* | Citation of document, with indication, where appropriate, of the relevant passages | Relevant to claim No. |
|---|---|---|
| A | WO 2006/051708 A1 (Idemitsu Kosan Co., Ltd.), 18 May 2006 (18.05.2006), entire text & JP 4969249 B & US 2009/0098786 A1 & WO 2006/051708 A1 | 1-13 |

Form PCT/ISA/210 (continuation of second sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2002201560 A


### Non-patent literature cited in the description


- **A. ZAMBELLI et al.** *Macromolecules,* 1975, vol. 8, 687
- **A. ZAMBELLI et al.** *Macromolecules,* 1973, vol. 6, 925